Europäisches Patentamt

European Patent Office

Office européen des brevets

(19)

(11) Veröffentlichungsnummer: **0 228 587**
**B1**

(12) **EUROPÄISCHE PATENTSCHRIFT**

(45) Veröffentlichungstag der Patentschrift: **06.06.90**

(21) Anmeldenummer: **86116763.3**

(22) Anmeldetag: **02.12.86**

(51) Int. Cl.⁵: **G 05 D 23/12, F 16 K 43/00,
F 16 K 1/44**

(54) **Thermostatventil.**

(30) Priorität: **07.12.85 DE 3543330**

(43) Veröffentlichungstag der Anmeldung:
**15.07.87 Patentblatt 87/29**

(45) Bekanntmachung des Hinweises auf die
Patenterteilung:
**06.06.90 Patentblatt 90/23**

(84) Benannte Vertragsstaaten:
**AT CH FR GB IT LI NL**

(56) Entgegenhaltungen:
**DE-A-3 309 532
DE-U-8 513 517
US-A-4 611 629**

(73) Patentinhaber: **Honeywell-Braukmann GmbH
Hardhofweg
D-6950 Mosbach/Baden (DE)**

(72) Erfinder: **Vollmer, Rudolf, Dipl.-Ing.
Friedrich-Hölderlin-Strasse 23
D-6950 Mosbach/Baden (DE)**

(74) Vertreter: **Herzbach, Dieter et al
Honeywell Europe S.A. Holding KG Patent- und
Lizenzabteilung Kaiserleistrasse 55 Postfach 184
D-6050 Offenbach am Main (DE)**

Courier Press, Leamington Spa, England.

**Beschreibung**

Die vorliegende Erfindung betrifft ein thermostatisch betätigtes Ventil nach dem Gattungsbegriff des Patentanspruches 1.

Derartige Ventile sind z.B. aus DE-C-3 112 138, US-A-4 611 629 und DE-UM-85 13 517 bekannt. Die bekannten Ventile weisen einen derart konstrurierten und mit einem einzigen Ventilsitz zusammenwirkenden Ventilschließkörpe auf, daß nach einer zunächst progressiven Öffnung des Ventils eine Begrenzung bzw. Verringerung des Durchflusses erzielt wird. Bei einer unerwünschten Entfernung des Thermostataufsatzes wird daher in gewünschter Weise der Durchfluß begenzt bzw. verringert.

Ferner ist aus DE-A-3 309 532 ein Thermostatventil bekannt, bei dem im Ventilgehäuse 2 in Durchflußrichtung hintereinander angeordnete Ventilsitze angeordnet sind und sich der Schließkörper zwischen beiden Ventilsitzen befindet. Dieses Ventil dient der wahlweisen Durchflußmengenregelung eines Heiz- oder Kühlmediums, wobei die beiden Ventilöffnungen jeweils als Regelventile benutzt werden.

Die bekannten Ventile nach dem eingangs genannten Stand der Technik stellen eine Sonderkonstruktion dar und die dort getroffenen Anordnungen sind nicht für die Nachrüstung von bereits installierten Ventilen verwendbar. Darüber hinaus sind die bekannten Konstruktionen nicht in der Lage, den Durchfluß des Heizmittelstromes ganz zu drosseln, da der Schließkörper mit Spiel durch den Ventilsitz montiert werden muß.

Es ist daher die Aufgabe der vorliegenden Erfindung, ein gattungsgemäßes Ventil in der Weise zu verbessern, daß beim Entfernen des Thermostataufsatzes der Heizittelstrom ganz oder bis zu einer geringen Restmenge gedrosselt wird, wobei handelsübliche Thermostatventile entsprechend nachrüstbar sein sollen.

Die Lösung dieser Aufgabe gelingt gemß den kennzeichnenden Merkmalen des Patentanspruches 1. Weitere vorteilhafte Ausgestaltungen des erfindungsgemäßen Ventils sind den abhägigen Ansprüchen entnehmbar.

Von besonderer Bedeutung ist, daß die Doppelsitzanordnung gemäß der Erfindung in einem austauschbaren Ventileinsatz angeordnet ist, so daß bereits installierte Ventile herkömmlicher Bauart mit der erfindungsgemäßen Konstruktion nachgerüstet werden können.

Anhand eines in den Figuren der beiliegenden Zeichnung dargestellten Ausführungsbeispieles sei im folgenden die Erfindung näher erläutert, Es zeigen:

Fig. 1 das erfindungsgemäße Thermostatventil in Schließstellung;

Fig. 2 das erfindungsgemäße Thermostatventil in voll geöffneter Stellung; und

Fig. 3 das erfindungsgemäße Thermostatventil bei entferntem Thermostataufsatz.

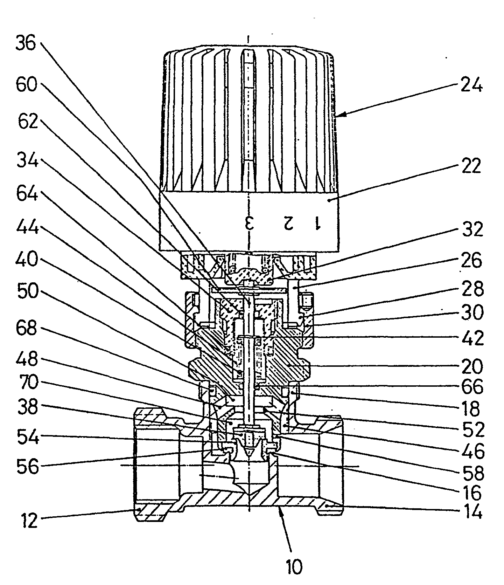

Gemäß Fig. 1 ist ein herkömmliches Ventilgehäuse 10 mit einem Eintrittsstutzen 12 und einem Austrittsstutzen 14 versehen, und zwischen dem Eintrittsstutzen 12 und dem Austrittsstutzen 14 ist in dem Ventilgehäuse 10 ein Ventilsitz 16 angeordnet. In einen nach oben ragenden rohrförmigem Gehäusebund 18 ist ein Ventileinsatz 20 eingeschraubt. Ein handelsüblicher mit einem Drehgriff 22 versehener Thermostataufsatz 24 weist nach unten gerichtete radial elastische Fußstege 26 auf, die mit Nasen 28 versehen sind und von einer Überwurfmutter 30 übergriffen werden, Die Überwurfmutter 30 ist auf den aus dem Gehäusebund 18 herusragenden Teil des Ventileinsatzes 20 aufgeschraubt, wobei die Fußstege 26 auf einer Stirnfläche des Ventileinatzes zur Anlage gelangen. Hierbei stützt sich ein federbelasteter, von einem nicht dargestellten Thermostatelement betätigter Stößel 32 auf einem in dem Ventileinatz 20 und in einer Stopfbuchse 34 geführten Ventilstift 36 ab. Am unteren Ende des Ventilstiftes 36 ist ein Ventilchließkörper 38 angeordnet.

Die Stopfbuchse 34 ist in ein zentrales Gewinde von oben n den Ventileinsatz 20 eingeschraubt, Eine Rückstellfeder 40 für den Ventilstift 36 stützt sich eineseits an einem Sprengring 42 und andererseits am Grund einer zentralen Ausnehmung 44 in dem Ventileinsatz 20 ab. Der Sprengring 42 sitzt in einer Umfangsnut am Ventilstift 36.

Der untere Teil des Ventileinsatzes 20 weist einen verringerten Außendurchmesser auf, so daß ein Ringraum 46 zwischen diesem Teil und der Innenwand des Gehäusebundes 18 gebildet wird, der mit dem Austrittsstutzen 14 in Verbindung steht. Dieser Ringraum 46 ist über Abströmöffnungen 48 mit einem Raum 50 oberhalb eines Absperrventilsitzes 52 verbunden, wobei der Absperrventilsitz 52 an dem Ventileinsatz 20 angeformt ist. Ein Regelventilsitz 54 ist über eine Bördelung mit dem unterern Ende des Ventileinsatzes 20 verbunden, wobei der Regelventilsitz 54 in den am Ventilgehäuse 10 angeordneten Ventilsitz 16 eingreift und mittels einer Dichtung 56 abgedichtet ist. Der Ventilschließkörper 38 befindet sich zwischen dem Absperrventilsitz 52 und dem Regelventilsitz 54, und er bewegt sich in einem Raum 70, der über eine Drosselbohrung 58 mit dem Austrittsstutzen 14 in Verbindung steht.

An dem aus der Stopfbuchse 34 herausragenden Teil des Ventilstiftes 36 ist mittels zweier Sprengringe eine Anschlagplatte 60 befestigt, die gemäß Fig, 2 an de Thermostataufsatz 24 zur Anlage gelangt, wenn das Ventil voll geöffnet ist. Der Ventilhub wird hierdurch so begrenzt, daß die Durchtrittsfläche am Absperrventilsitz 52 gleich oder größer als die am Regelventilsitz vorgegebene Durchtrittsfläche bei Nenndurchfluß ist.

Verschiedene O-Ringdichtungen 62, 64, 66 und 68 dienen der Abdichtung zwischen dem Ventilstift 36 und der Stopfbuchse 34, zwischen der Stopfbuchse 34 und dem Ventileinsatz 20, zwischen dem Ventilstift 36 und dem Ventileinsatz 20 und zwischen dem Ventileinsatz 20 und dem Gehäusebund 18.

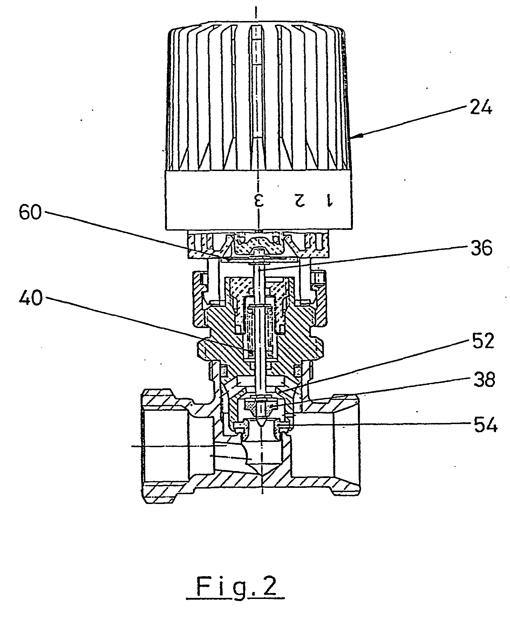

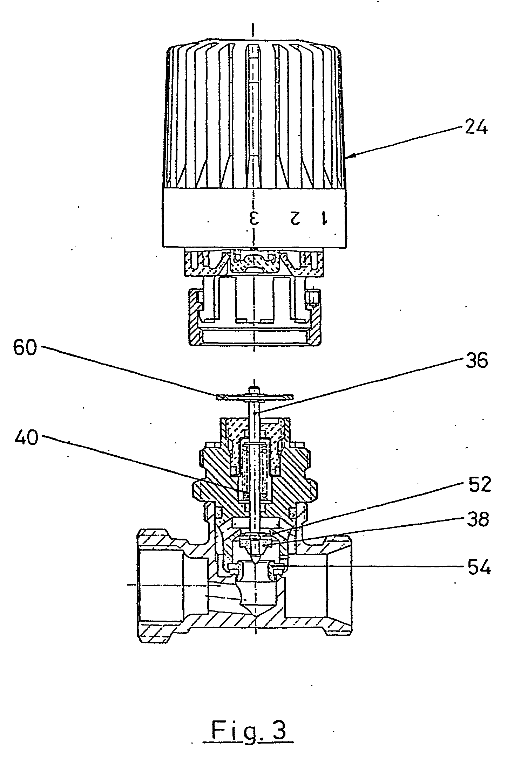

In Fig. 1 befindet sich das Thermostatventil in der Schließstellung, und der Schließkörper 38 liegt am Regelventilsitz 54 an. Hingegen befindet sich in Fig. 2 das Ventil in der voll geöffneten Stellung, die durch den Anschlag der Anschlagplatte 60 an dem Thermostataufsatz 24 vorgegeben ist, so daß der maximale Nenndurchfluß gewährleistet ist. In Fig. 3 ist der Thermostataufsatz 24 entfernt, so daß die Rückstellfeder 40 den Ventilschließkörper 38 an dem Absperrventilsitz 52 zur Anlage bringt und nur noch die Drosselbohrung 58 für den Heizmitteldurchfluß freigegeben ist, wodurch ein Einfrieren eines nachgeschalteten Heizkörpers verhindert wird.

## Patentansprüches

1. Thermostatisch betätigtes Ventil mit einen von einem Thermostataufsatz (24) über eine Ventilspindel (36) entgegen der Kraft einer Rückstellfeder (40) betätigbaren Schließkörper (38), der mit einem Ventilsitzkörper (20) zusammenarbeitet, dadurch gekennzeichnet, daß

a) der Ventilsitzkörper (20) zwei in Durchlußrichtung des Ventils hintereinauder angeordnete Ventilsitze (52, 54) aufweist, wobei der Schließkörper (38) zwischern beiden Ventilsitzen (52, 54) angeordnet ist;

b) der zuerst durchströmte Ventilsitz als Regelventilsitz (54) und der nachgeschaltete Ventilsitz als Absperrventilsitz (52) ausgebildet ist;

c) die beiden Ventilsitze (52, 54) an einem auswechselbaren Ventileinsatz (20) angeordnet sind; und

d) hinter dem Absperrventilsitz (52) mit dem Ventilausgang verbundene Abströmöffnungen (48) in dem Ventilsitzkörper (20) angeordnet sind.

2. Ventil nach Anspruch 1, gekennzeichnet durch eine mit dem Ventilausgang verbundene Drosselbohrung (58) zwischen Regelventilsitz (54) und Absperrventilsitz (52).

3. Ventil rach Anspruch 2, dadurch gekennzeichnet, daß der Schließkörper (38) durch den aufgesetzten Thermostataufsatz (24) in eine Stellung gebracht wird, irn der der Spalt zwischen Absperrventilsitz (52) und Schließkörper (38) gleich groß oder größer als der Regelspalt zwischen Regelventilsitz (54) und Schließkörper (38) bei Nenndurchfluß ist.

4. Ventil nach Anspruch 1, dadurch gekennzeichnet, daß der Ventileinsatz (20) in einen Gehäusebund (18) des Ventilgehäuses (10) einschraubbar ist.

5. Ventil nach Anspruch 4, dadurch gekennzeichnet, daß der Regelventilsitz (54) abdichtend an dem eigentlichen Ventilsitz (16) des Ventilgehäuses (10) anliegt.

6. Ventil nach Anspruch 5, dadurch gekennzeichnet, daß der Regelventilsitz (54) in den unteren Teil des Vertileinsatzes (20) eingebördelt ist.

7. Ventil nach Anspruch 6, dadurch gekennzeichnet, daß der untere Teil des Ventileinsatzes (20) einen gegenüber dem oberen Teil verjüngten Außendurchmesser aufweist, um einen mit dem Ventilausgang in Verbindung stehenden Ringraum (46) vorzugeben, der über die Abströmöffnungen (48) mit einem Raum (68) hinter dem Absperrventilsitz (52) verbunden ist.

8. Ventil nach einem der Ansprüche 1 bis 7, gekennzeichnet durch eine mit der Ventilspindel (36) verbundene Anshlagplatte (60), die bei voll geöffnetem Ventil durch Anschlag an dem Thermostataufsatz (24) den Ventilhub begrenzt.

## Revendications

1. Valve actionnée thermostatiquement comportant un corps de fermeture (38) qui peut, par l'intermédiaire d'une tige de valve (36), être actionné par un chapeau constituant le thermostat (24), contre la force d'un ressort de rappel (40), et qui coopère avec un corps de siège de valve (20), caractérisée en ce que

a) le corps de siège de valve (20) présente deux sièges de valve (52, 54) disposés l'un derrière l'autre dans la direction de traversée de la valve, le corps de fermeture (38) étant disposé entre les deux sièges de valve (52, 54);

b) le siège de valve traversé en premier présente une structure de siège de valve de réglage (54) et le siège de valve disposé en aval une structure de siège de valve d'arrêt (52);

c) les deux sièges de valve (52, 54) sont disposés sur un insert de valve interchangeable (20); et

d) les ouvertures d'écoulement (48) reliées à la sortie de valve sont disposées dans le corps de siège de valve (20) derrière le siège de valve d'arrêt (52).

2. Valve selon la revendication 1, caractérisée par un perçage à étranglement (58), relié à la sortie de valve, situé entre le siège de valve de réglage (54) et le siège de valve d'arrêt (52).

3. Valve selon la revendication 2, caractérisée en ce que le corps de fermeture (38) est amené, par le chapeau constituant le thermostat (24) qui y est monté, dans une position dans laquelle la fente entre le siège de valve d'arrêt (52) et le corps de fermeture (38) est égale ou supérieure à la fente de réglage entre le siège de valve de réglage (54) et le corps de fermeture (38) pour le débit nominal.

4. Valve selon la revendication 1, caractérisée en ce que l'insert de valve (20) peut être vissé dans une collerette de boîtier (18) du boîtier de valve (10).

5. Valve selon la revendication 4, caractérisée en ce que le siège de valve de réglage (54) repose de façon étanche sur le siège de valve (16) proprement dit du boîtier de valve (10).

6. Valve selon la revendication 5, caractérisée en ce que le siège de valve de réglage (54) est serti dans la partie inférieure de l'insert de valve (20).

7. Valve selon la revendication 6, caractérisée en ce que la partie inférieure de l'insert de valve (20) présente un diamètre extérieur réduit par rapport à la partie supérieure, pour réaliser un espace annulaire (46) qui est en liaison avec la sortie de valve et qui est relié par les ouvertures d'écoulement (48) à un espace (68) situé derrière la valve d'arrêt (52).

8. Valve selon l'une des revendications i à 7, caractérisée par une plaque de butée (60) reliée à la tige de valve (36), cette plaque limitant, par butée sur le chapeau constituant le thermostat, la course de valve (24) lorsque la valve est totalement ouverte.

**Claims**

1. Thermostatic valve comprising a valve headpiece (24) actuating via a valve rod (36) which is biased by a spring (40) on a closing body (38) which cooperates with a valve seat (20), characterized in that

a) the valve seat (20) in flow direction comprises two series connected valve seats (52, 54) with the closing body (38) arranged in between those two valve seats (52, 54);

b) the valve seat first flown through operates as a control valve seat (54) and the valve seat flown through afterwards operates as a shut-off valve seat (52);

c) both valve seats (52, 54) are arranged at an exchangeable valve insert (20); and

d) the valve insert (20) is provided with escape openings (48) venting the chamber behind the shut-off valve (52) to the valve outlet.

2. Valve according to claim 1, characterized by a throttling bore (58) connecting the chamber between the control valve seat (54) and the shut-off valve seat (52) to the valve outlet.

3. Valve according to claim 2, characterized in that the closing body (38) is adjusted by the headpiece (24) in a position where the gap between the control valve seat (52) and the closing body (38) equals the control gap or is greater than the control gap between the control valve seat (54) and the closing body (38) at the nominal flow.

4. Valve according to claim 1, characterized in that the valve insert (20) is screwable into a collar (18) of the valve housing (10).

5. Valve according to claim 4, characterized in that the control valve seat (54) tightly abuts against the intrinsic valve seat (16) of the valve housing (10).

6. Valve according to claim 5, characterized in that the control valve seat (54) is rolled-in in the lower portion of the valve insert (20).

7. Valve according to claim 6, characterized in that the lower portion of the valve insert (20) comprises an outer diameter which is recessed with respect to the diameter of the upper portion in order to provide a ring chamber (46) in flow connection with the valve outlet and being connected via the escape openings (48) to the chamber (68) behind the shut-off valve seat (52).

8. Valve according to one of claims 1 to 7, characterized by a stop plate (60) connected to the valve rod (36) serving to limit the valve stroke when the valve is completely opened by abutting against the headpiece (24).

## Fig.2

Fig.3

3